# EUROPEAN PATENT SPECIFICATION

(11) **EP 3 974 164 B1**
(45) Date of publication and mention of the grant of the patent: **27.03.2024**
(21) Application number: 21197748.3
(22) Date of filing: 20.09.2021
(51) Int. Cl.: B29D 30/06

(54) **TIRE VULCANIZING METHOD**
REIFENVULKANISATIONSVERFAHREN
PROCÉDÉ DE VULCANISATION DE PNEUS

(30) Priority: 23.09.2020 JP 2020158826
(43) Date of publication of application: 30.03.2022
(73) Proprietor: Sumitomo Rubber Industries, Ltd., Kobe-shi, Hyogo-ken 651-0072 (JP)
(72) Inventor: OTANI, Koji, Kobe-shi, Hyogo, 651-0072 (JP)
(74) Representative: Manitz Finsterwald Patent- und Rechtsanwaltspartnerschaft mbB

(56) References cited:
- GB-A- 1 403 030
- JP-A- 2017 087 615

## Description

### BACKGROUND OF THE INVENTION

### Field of the Invention

The present invention relates to a tire vulcanizing method.

### Description of the Background Art

Japanese Laid-Open Patent Publication No. 2018-15908 describes a tire vulcanization molding method that is performed with a green tire inserted into a mold. The mold incudes a plurality of sectors arranged in a circle and a pair of side plates provided on the radially inner side of the circle formed by the sectors.

A tire vulcanizing method in accordance with the preamble of claim 1 is known from GB 1 404 030 A. A related tire vulcanizing method is known from JP 2017 087615 A.

In the tire vulcanization molding method, when the sectors and the side plate are separated from each other, the green tire is inserted into the mold, and a bead portion of the green tire is positioned on the tire equator side with respect to a molding position. Then, at the same time as or after closing the sectors and the side plate, the bead portion of the green tire is moved to the molding position, and vulcanization molding is performed. With such a molding method, it is considered that the green tire can be prevented from being bitten between the sector and the side plate.

However, in order to move the bead portion to the molding position as described above, it is necessary to move the side plate outward in the tire axial direction (this movement is referred to as "side plate movement"). Since the sectors and the side plate are closed before the side plate movement, there is a problem that when the side plate movement is performed, the side plate and the sector rub against each other, causing wear damage.

The present invention has been made in view of the above circumstances, and a main object of the present invention is to provide a tire vulcanizing method that can suppress biting of a green tire into a vulcanization mold (hereinafter, sometimes referred to as "rubber biting") and wear damage of the vulcanization mold, while allowing a smooth removal of the vulcanized tire from the vulcanization mold.

### SUMMARY OF THE INVENTION

The present invention is directed to a tire vulcanizing method for vulcanizing a green tire using a vulcanization mold including a tread mold for molding a tread portion of the green tire and a pair of side molds for molding a pair of sidewall portions of the green tire, the tire vulcanizing method including: a mounting step of mounting the green tire within the vulcanization mold in a state where the vulcanization mold is opened; and a vulcanizing step of vulcanizing the green tire in a closed state where the tread mold and the pair of side molds are set at predetermined reference positions, wherein the mounting step includes a green tire pressing step of, after the green tire is mounted within the vulcanization mold, moving at least one of the pair of side molds such that the pair of side molds are closer to each other in a tire axial direction than the reference positions thereof, to reduce a width in the tire axial direction between the pair of sidewall portions of the green tire, a positioning step of, after a predetermined time elapses from the green tire pressing step, moving the pair of side molds to the reference positions and stopping the pair of side molds, and a tread mold moving step of, after the positioning step, moving the tread mold in a tire radial direction to position the tread mold at the reference position thereof. A division position between the pair of side molds and the tread mold is within 15% of a tire cross-sectional height inward and outward in the tire radial direction from a maximum width position of a vulcanized tire.

In the tire vulcanizing method according to the present invention, preferably, the tread mold includes a plurality of segments aligned in a tire circumferential direction, and in the tread mold moving step, the plurality of segments are moved inward in the tire radial direction.

In the tire vulcanizing method according to the present invention, the division position between the pair of side molds and the tread mold is preferably the maximum width position of the vulcanized tire.

Since the tire vulcanizing method according to the present invention is configured as described above, rubber biting and wear damage of the vulcanization mold can be suppressed.

### BRIEF DESCRIPTION OF THE DRAWINGS

FIG. 1 is a cross-sectional view conceptually showing an embodiment of the vulcanizing apparatus according to the present invention;
FIGS. 2(a) and 2(b) are a cross-sectional view and a partial side view showing a tire formed in the present invention;
FIG. 3 is an enlarged cross-sectional view showing a main part of the vulcanizing apparatus in FIG. 1;
FIG. 4 is a cross-sectional view showing a vulcanization mold in a closed state together with a tire;
FIG. 5(a) is a flowchart of a tire vulcanizing method;
FIG. 5(b) is a flowchart of a mounting step;
FIGS. 6(a) and 6(b) are cross-sectional views conceptually illustrating the mounting step; and
FIGS. 7(a) and 7(b) are cross-sectional views conceptually illustrating the mounting step.

### DESCRIPTION OF THE PREFERRED EMBODIMENTS

Hereinafter, an embodiment of the present invention will be described with reference to the drawings.

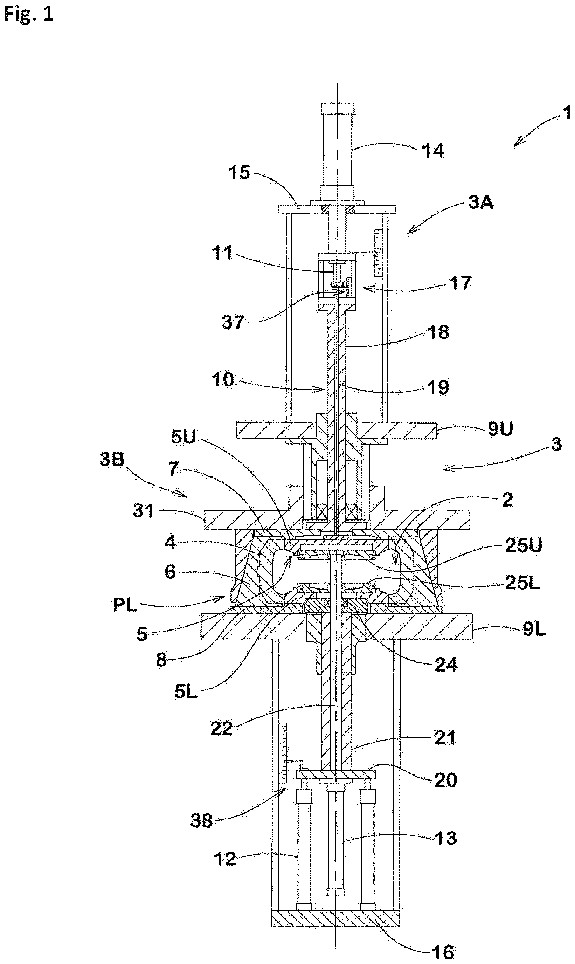

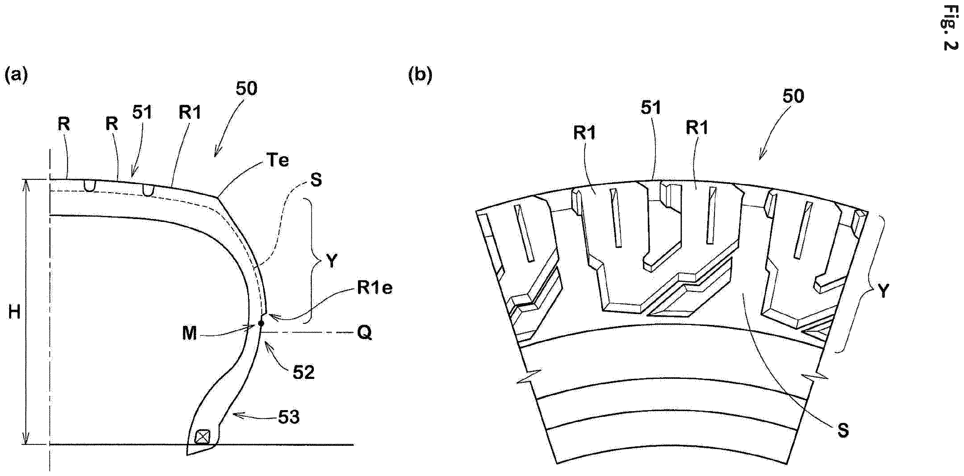

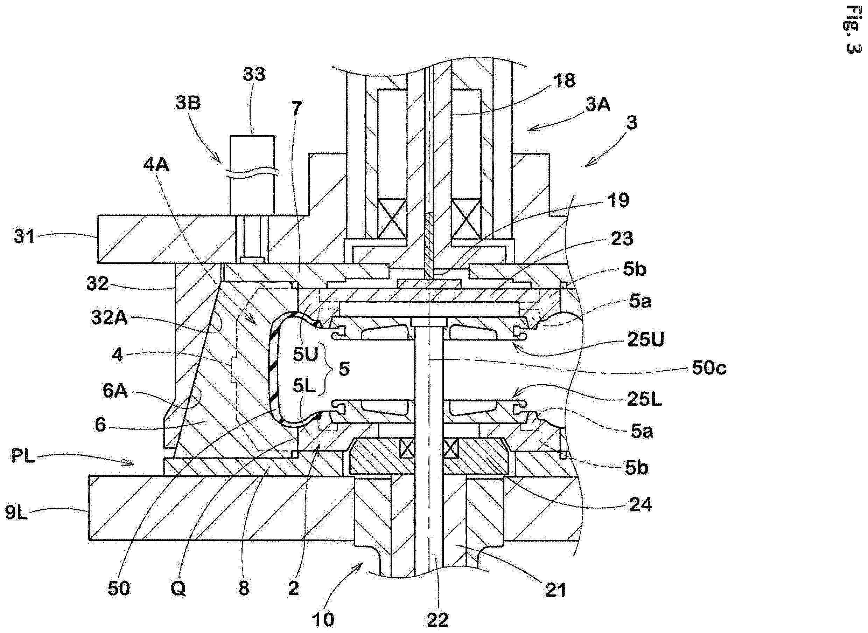

FIG. 1 is a cross-sectional view conceptually showing an embodiment of a vulcanizing apparatus 1 used in the tire vulcanizing method according to the present invention. FIGS. 2(a) and 2(b) are a cross-sectional view and a side view of an embodiment of a vulcanized tire (hereinafter, sometimes referred to as "tire") 50 formed by the vulcanizing apparatus 1. The tire 50 is obtained by vulcanizing a green tire 50a (shown in FIG. 3).

As shown in FIGS. 2(a) and 2(b), the tire 50 of the present embodiment is used, for example, for a four-wheel-drive vehicle such as an SUV. The tire 50 includes, for example, a tread portion 51, sidewall portions 52 extending inward in the tire radial direction from both outer sides in the tire axial direction of the tread portion 51, and bead portions 53 disposed inward of the respective sidewall portions 52 in the tire radial direction. FIGS. 2(a) and 2(b) show the sidewall portion 52 and the bead portion 53 on one side.

In the tread portion 51, a tread pattern in which a plurality of block rows R extending in the tire circumferential direction are aligned in the tire axial direction is formed. The tread pattern includes a shoulder block row R1 located on each outermost side in the tire axial direction.

In the present embodiment, in order to improve traction performance on off-road and appearance performance, the shoulder block row R1 also extends inward in the tire radial direction from a tread end Te to be formed in an outer region Y in the tire radial direction of the sidewall portion 52. The shoulder block row R1 protrudes from a surface S of the sidewall portion 52. The shape, the protrusion height, etc., of the shoulder block row R1 can be appropriately set according to the tire size, etc. The tire 50 is not limited to such a mode.

As shown in FIG. 1, the vulcanizing apparatus 1 of the present embodiment includes a vulcanization mold 2 within which the green tire 50a is to be mounted, and an apparatus main body 3 which supports the vulcanization mold 2 such that the vulcanization mold 2 can be opened and closed.

FIG. 3 is an enlarged view of a main part of FIG. 1. As shown in FIG. 1 and FIG. 3, the vulcanization mold 2 includes an annular tread mold 4 whose diameter can be enlarged and reduced in the tire radial direction, a pair of side molds 5, and a vulcanization bladder which is not shown and which has a well-known structure. The green tire 50a is horizontally mounted within the vulcanization mold 2 of the present embodiment. Therefore, in the present description, in the vulcanizing apparatus 1, the tire axial direction is the vertical (up-down) direction. In addition, the tire radial direction and the tire circumferential direction are horizontal directions.

In the present embodiment, the tread mold 4 is formed of a plurality of segments 4A disposed in the tire circumferential direction. Each segment 4A is, for example, replaceably held by a sector 6 having a well-known structure. The segment 4A is provided with a molding surface for forming the tread pattern.

The pair of side molds 5 of the present embodiment include an upper side mold 5U and a lower side mold 5L disposed below the upper side mold 5U. Each of the pair of side molds 5 is provided with a molding surface for forming the sidewall portion 52 and the bead portion 53 (shown in FIG. 2). Each of the side molds 5U and 5L is, for example, divided into a bead ring 5a for forming the bead portion 53 and a side plate 5b for forming the sidewall portion 52. Each of the side molds 5U and 5L is not limited to such a mode, and may be, for example, for integrally forming the sidewall portion 52 and the bead portion 53.

In the present embodiment, a division position Q between the pair of side molds 5 and the tread mold 4 is located at least at the inner side in the tire radial direction with respect to an innermost end R1e in the tire radial direction of the shoulder block row R1 as shown in FIG. 2(a). According to the inventive method, the division position Q is within 15% of a tire cross-sectional height H inward and outward in the tire radial direction from a maximum width position M of the tire 50. More preferably, the division position Q is within 10% of the tire cross-sectional height H inward and outward in the tire radial direction from the maximum width position M. Further preferably, the division position Q is within 5% of the tire cross-sectional height H inward and outward in the tire radial direction from the maximum width position M. Such a vulcanization mold 2 allows the tire 50 to be smoothly taken out therefrom. The division position Q is more preferably the maximum width position M of the tire 50.

As shown in FIG. 1 and FIG. 3, the apparatus main body 3 includes an axial movement tool 3 A which can move the vulcanization mold 2 in the tire axial direction, and a diameter enlarging/reducing tool 3B which can enlarge and reduce the diameter of the tread mold 4.

In the present embodiment, the axial movement tool 3A includes an upper plate 7 which supports the tread mold 4, a lower plate 8 on which the lower side mold 5L is placed, and upper and lower bases 9U and 9L supported by a frame which is not shown. The lower base 9L is disposed below the lower plate 8 and supports the lower plate 8. The lower base 9L is fixed to a bottom plate 16 disposed below the lower base 9L. The upper base 9U is disposed above the upper plate 7. The upper base 9U, for example, supports a top plate 15 disposed above the upper base 9U. The vulcanization bladder is disposed between the upper plate 7 and the lower plate 8.

In the present embodiment, the axial movement tool 3A substantially includes a center mechanism 10 extending along a rotation axis 50c of the tire 50. The rotation axis 50c of the tire 50 is located at the center of the upper plate 7, the lower plate 8, and the upper and lower bases 9U and 9L.

The center mechanism 10 includes, for example, a first lifting tool 11, a second lifting tool 12, a third lifting tool 13, and a fourth lifting tool 14. In the present embodiment, the first lifting tool 11 to the fourth lifting tool 14 are each formed of a cylinder (rod cylinder) having a well-known structure.

In the present embodiment, the center mechanism 10 also includes a joint portion 17, an upper support cylinder 18, an upper lifting shaft 19, a lifting plate 20, a lower support cylinder 21, and a center post 22. The joint portion 17 is, for example, disposed at the lower end of a rod of the fourth lifting tool 14. In the present embodiment, the joint portion 17 supports the first lifting tool 11. The upper support cylinder 18, for example, has a tubular shape and is disposed at the lower end of the joint portion 17. The upper support cylinder 18, for example, holds the upper plate 7 at the lower end thereof. The upper lifting shaft 19 of the present embodiment extends in the tire axial direction through the center hole of the upper support cylinder 18 and is connected to the lower end of a rod of the first lifting tool 11. For example, the upper side mold 5U is attached to the lower end of the upper lifting shaft 19 via a connection portion 23. The lifting plate 20 is, for example, supported by the upper end of a rod of the second lifting tool 12. In the present embodiment, the lifting plate 20 supports the third lifting tool 13. The lower support cylinder 21, for example, has a tubular shape and extends upward from the lifting plate 20. The lower side mold 5L is supported by the upper end of the lower support cylinder 21 of the present embodiment via a holder 24. The center post 22, for example, extends in the tire axial direction through the center hole of the lower support cylinder 21 and is connected to the upper end of a rod of the third lifting tool 13. At the upper end of the center post 22, for example, an upper grip ring 25U which holds an upper end portion of the vulcanization bladder is attached. A lower grip ring 25L which holds a lower end portion of the vulcanization bladder is disposed below the upper grip ring 25U. The lower grip ring 25L is attached to the upper surface of the lower side mold 5L.

The top plate 15, for example, supports the fourth lifting tool 14. The bottom plate 16, for example, supports the second lifting tool 12.

Therefore, by extension and retraction of the rod of the first lifting tool 11, for example, the upper side mold 5U can be moved inward and outward in the tire axial direction relative to the upper plate 7. By extension and retraction of the rod of the second lifting tool 12, for example, the lower side mold 5L can be moved inward and outward in the tire axial direction relative to the lower plate 8. By extension and retraction of the rod of the third lifting tool 13, for example, the upper end portion of the vulcanization bladder (upper grip ring 25U) is positioned in the tire axial direction. By extension and retraction of the rod of the fourth lifting tool 14, for example, the upper plate 7 can be moved inward and outward in the tire axial direction together with the tread mold 4.

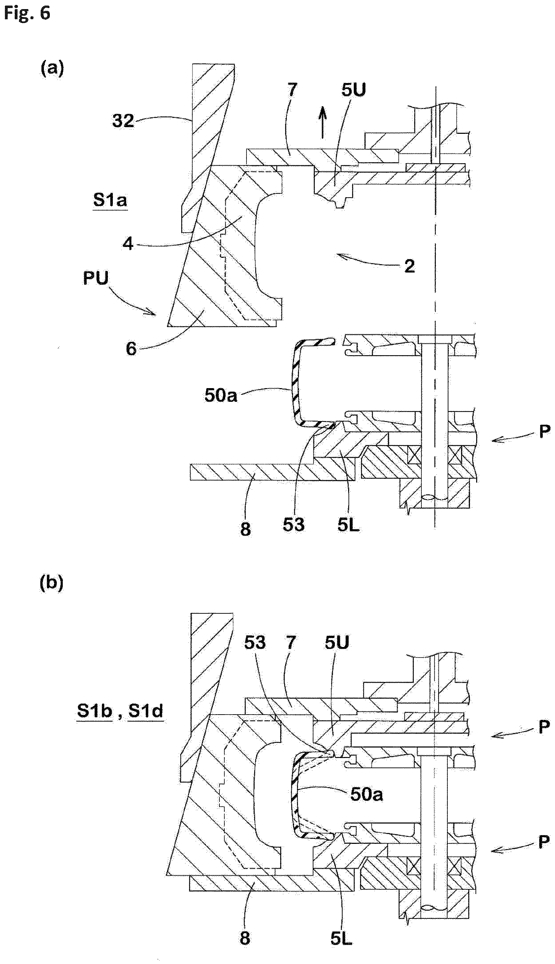

By extension of the rod of the fourth lifting tool 14, for example, the tread mold 4 can be moved up and down between a lowered state PL (shown in FIGS. 1 and 3) where the lower surface of the sector 6 is in contact with the lower plate 8 and a standby state PU (shown in FIG. 6 (a)) where the sector 6 is separated upward from the lower plate 8. In addition, by extension of the rod of the fourth lifting tool 14, for example, the upper side mold 5U is moved inward and outward in the tire axial direction together with the upper plate 7. In the lowered state PL, the rod of the first lifting tool 11 is extended, so that the upper side mold 5U is moved inward in the tire axial direction relative to the upper plate 7.

In the present embodiment, the diameter enlarging/reducing tool 3B includes a lifting plate 31, a cylindrical actuator 32 supported by the lifting plate 31, and a fifth lifting tool 33 (shown in FIG. 3). On the inner peripheral surface of the actuator 32, a guide portion 32A is disposed so as to be inclined outward in the tire radial direction toward the lower side. The lifting plate 31 is, for example, disposed so as to be movable up and down relative to the upper plate 7 by the fifth lifting tool 33. The fifth lifting tool 33 is composed of, for example, a well-known cylinder (rod cylinder).

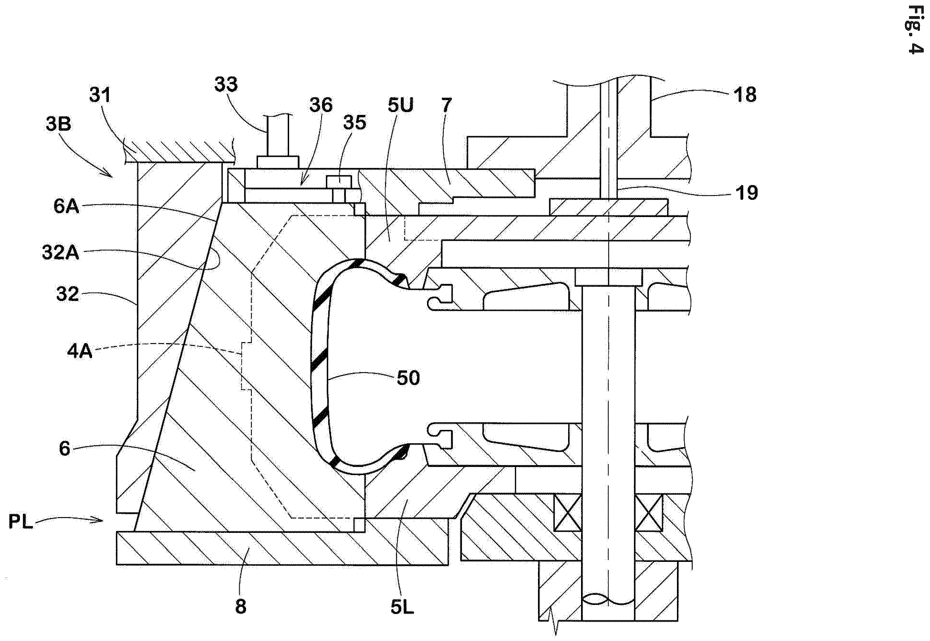

FIG. 4 is an enlarged view of FIG. 3. As shown in FIG. 4, the segment 4A is held by the upper plate 7 so as to be movable in the tire radial direction by a guide pin 35 at the upper end of the sector 6 being guided by a guide groove 36 provided in the upper plate 7. On the outer surface in the tire radial direction of the sector 6, a guide portion 6A which is guided by the guide portion 32A and which has the same inclination as the guide portion 32A is provided.

Therefore, by extension and retraction of a rod of the fifth lifting tool 33, the actuator 32 is lifted or lowered relative to the upper plate 7. Accordingly, each segment 4A can be moved in the tire radial direction, and the diameter of the tread mold 4 can be enlarged or reduced. After the diameter is enlarged, the tread mold 4 in the diameter-enlarged state and the upper side mold 5U are lifted together by the upper plate 7 being lifted by the fourth lifting tool 14 (shown in FIG. 6(a)). This state is an open state in which the vulcanization mold 2 is opened and in which the green tire 50a can be mounted within the vulcanization mold 2 and the vulcanized tire 50 can be taken out therefrom.

Preferably, the vulcanizing apparatus 1 of the present embodiment further includes a controller (not shown) for operating the first to fifth lifting tools 11, 12, 13, 14, and 33. The controller is preferably, for example, a computer or the like, and an operation procedure, an operation amount, etc., for each lifting tool are stored therein.

As shown in FIG. 1, the vulcanizing apparatus 1 is preferably provided with a first detection means 37 and a second detection means 38. For example, the first detection means 37 detects the relative movement distance in the tire axial direction of the upper side mold 5U with respect to the upper plate 7. The second detection means 38 detects the relative movement distance in the tire axial direction of the lower side mold 5L with respect to the lower plate 8. As the first and second detection means 37 and 38, various well-known measuring instruments or sensors are adopted.

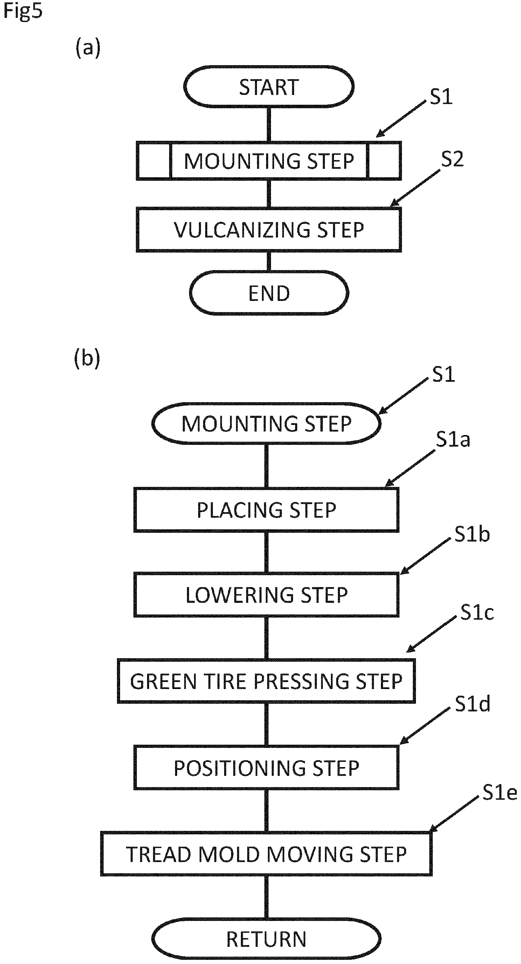

Next, a tire vulcanizing method using the vulcanizing apparatus 1 will be described. FIG. 5(a) is a flowchart of the tire vulcanizing method of the present embodiment. As shown in FIG. 5(a), the tire vulcanizing method of the present embodiment includes: a mounting step S1 of mounting the green tire 50a within the vulcanization mold 2; and a vulcanizing step S2 of bringing the vulcanization mold 2 into a closed state and vulcanizing the green tire 50a.

FIG. 5(b) is a flowchart of the mounting step S1 of the present embodiment. As shown in FIG. 5(b), the mounting step S1 of the present embodiment includes a green tire pressing step S1c, a positioning step S1d, and a tread mold moving step S1e. In addition, the mounting step S1 includes, for example, a placing step S1a and a lowering step S1b.

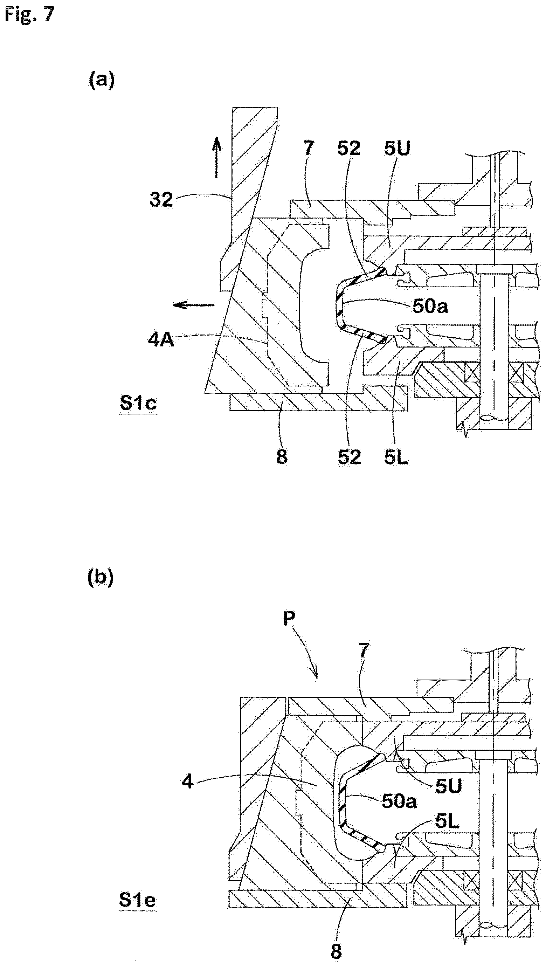

FIG.S 6(a) and 6(b) and FIGS. 7(a) and 7(b) are cross-sectional views conceptually illustrating the mounting step S1. As shown in FIG.S 6(a) and 6(b) and FIGS. 7(a) and 7(b), in the mounting step S1, first, the placing step S1a is performed. In the placing step S1a of the present embodiment, as shown in FIG. 6(a), the vulcanization mold 2 is in an open state. Specifically, at least the tread mold 4, the sector 6, and the upper side mold 5U are located above the uppermost end portion of the green tire 50a or the tire 50 placed on the lower side mold 5L. In the placing step S1a, the green tire 50a is mounted to the vulcanization mold 2 in the open state. Specifically, the lower bead portion 53 of the green tire 50a is placed on the lower side mold 5L attached to the lower plate 8. At this time, the lower side mold 5L is at a reference position P. The reference position P is a predetermined position of the vulcanization mold 2 at which the green tire 50a is to be vulcanized.

Next, the lowering step S1b is performed. As shown in FIG. 6(b), in the lowering step S1b of the present embodiment, the rod of the fourth lifting tool 14 is extended, so that the upper side mold 5U is lowered together with the upper plate 7. In the lowering step S1b, for example, the upper side mold 5U is lowered to a reference position P. At this time, the upper bead portion 53 of the green tire 50a is located so as to be in contact with the upper side mold 5U.

Next, the green tire pressing step S1c is performed. As shown in FIG. 7(a), in the green tire pressing step S1c of the present embodiment, the width in the tire axial direction between the pair of sidewall portions 52 of the green tire 50a is reduced. In the green tire pressing step S1c, for example, at least one of the pair of side molds 5U and 5L is moved such that the pair of side molds 5U and 5L are closer to each other in the tire axial direction than the reference positions P thereof. Specifically, by extending the rod of the first lifting tool 11, the upper lifting shaft 19 is lowered, so that the upper side mold 5U is moved downward relative to the upper plate 7. In addition, by extending the rod of the second lifting tool 12, the lower support cylinder 21 is extended, so that the lower side mold 5L is moved upward relative to the lower plate 8. Accordingly, the width in the tire axial direction between the sidewall portions 52 of the green tire 50a is reduced.

Next, the positioning step S1d is performed. As shown in FIG. 6(b), in the present embodiment, in the positioning step S1d, after a predetermined time elapses from the green tire pressing step S1c, the pair of side molds 5U and 5L are moved to the reference positions P and stopped. The upper side mold 5U is moved to the reference position P, for example, by retracting the rod of the first lifting tool 11. The lower side mold 5L is moved to the reference position P, for example, by retracting the rod of the second lifting tool 12. At this time, by the green tire pressing step S1c, the green tire 50a is maintained in a state where the width in the tire axial direction between the sidewall portions 52 is reduced (shown by a broken line).

Next, the tread mold moving step S1e is performed. As shown in FIG. 7(b), in the tread mold moving step S1e of the present embodiment, the tread mold 4 is moved in the tire radial direction and positioned at a reference position P. In the present embodiment, the tread mold 4 is moved inward in the tire radial direction and positioned at the reference position P by extension of the rod of the fifth lifting tool 33 (shown in FIG. 4). Accordingly, rubbing of each side mold 5 and each tread mold 4 against each other in the tire axial direction is suppressed, so that wear damage is suppressed. In addition, at this time, since the width in the tire axial direction between the sidewall portions 52 of the green tire 50a is reduced by the green tire pressing step S1c, rubber biting of the sidewall portions 52 between the tread mold 4 and the respective side molds 5U and 5L is suppressed.

In the tread mold moving step S1e, the vulcanization mold 2 is brought into a closed state where each component thereof is set at the reference position P. In the closed state 11, the segments 4A, 4A are strongly pressed against each other, and the segments 4A and the upper and lower side molds 5U and 5L are strongly pressed against each other.

Next, the vulcanizing step S2 is performed. The vulcanizing step S2 of the present embodiment is performed by a well-known method using the vulcanization bladder.

Although the particularly preferred embodiment of the present invention has been described in detail above, the present invention is not limited to the above-described embodiment, and various modifications can be made to practice the present invention within the scope of the appended claims.

## Claims

1. A tire vulcanizing method for vulcanizing a green tire (50a) using a vulcanization mold (2) including a tread mold (4) for molding a tread portion of the green tire (50a) and a pair of side molds (5) for molding a pair of sidewall portions (52) of the green tire (50a), the tire vulcanizing method comprising:
a mounting step (S1) of mounting the green tire (50a) within the vulcanization mold (2) in a state where the vulcanization mold (2) is opened; and
a vulcanizing step (S2) of vulcanizing the green tire (50a) in a closed state where the tread mold (4) and the pair of side molds (5) are set at predetermined reference positions (P), wherein
the mounting step (S1) includes
a green tire pressing step (S1c) of, after the green tire (50a) is mounted within the vulcanization mold (2), moving at least one of the pair of side molds (5) such that the pair of side molds (5) are closer to each other in a tire axial direction than the reference positions (P) thereof, to reduce a width in the tire axial direction between the pair of sidewall portions (52) of the green tire (50a), and
a positioning step (S1d) of, after a predetermined time elapses from the green tire pressing step (S1c), moving the pair of side molds (5) to the reference positions (P) and stopping the pair of side molds (5),
**characterized in that**
the tire vulcanizing method comprises a tread mold moving step (S1e) of, after the positioning step (S1d), moving the tread mold (4) in a tire radial direction to position the tread mold (4) at the reference position (P) thereof, and
a division position (Q) between the pair of side molds (5) and the tread mold (4) is within 15% of a tire cross-sectional height (H) inward and outward in the tire radial direction from a maximum width position (M) of a vulcanized tire (50).

2. The tire vulcanizing method according to claim 1, wherein
the tread mold (4) includes a plurality of segments (4A) aligned in a tire circumferential direction, and
in the tread mold moving step (S1e), the plurality of segments (4A) are moved inward in the tire radial direction.

3. The tire vulcanizing method according to claim 1 or 2, wherein the division position (Q) between the pair of side molds (5) and the tread mold (4) is within 5% of the tire cross-sectional height (H) inward and outward in the tire radial direction from the maximum width position (M) of the vulcanized tire (50).

4. The tire vulcanizing method according to any one of claims 1 to 3, wherein the division position (Q) between the pair of side molds (5) and the tread mold (4) is the maximum width position (M) of the vulcanized tire (50).

## Patentansprüche

1. Reifenvulkanisierverfahren zum Vulkanisieren eines Reifenrohlings (50a) unter Verwendung einer Vulkanisierform (2), die eine Laufflächenform (4) zum Formen eines Laufflächenabschnitts des Reifenrohlings (50a) und ein Paar Seitenformen (5) zum Formen eines Paars Seitenwandabschnitte (52) des Reifenrohlings (50a) umfasst, wobei das Reifenvulkanisierverfahren umfasst:
einen Montageschritt (S1) eines Montierens des Reifenrohlings (50a) in der Vulkanisierform (2) in einem Zustand, in dem die Vulkanisierform (2) geöffnet ist; und
einen Vulkanisierschritt (S2) eines Vulkanisierens des Reifenrohlings (50a) in einem geschlossenen Zustand, in dem die Laufflächenform (4) und das Paar Seitenformen (5) auf vorbestimmte Referenzpositionen (P) eingestellt sind, wobei
der Montageschritt (S1) umfasst
einen Reifenrohling-Pressschritt (S1c) eines Bewegens mindestens einer des Paars Seitenformen (5) derart, dass das Paar Seitenformen (5) in einer Reifenaxialrichtung näher beieinander sind als ihre Referenzpositionen (P), um eine Breite in der Reifenaxialrichtung zwischen dem Paar Seitenwandabschnitten (52) des Reifenrohlings (50a) zu verringern, nachdem der Reifenrohling (50a) in der Vulkanisierform (2) montiert worden ist, und
einen Positionierungsschritt (S1d) eines Bewegens des Paars Seitenformen (5) zu den Referenzpositionen (P) und Anhaltens des Paars Seitenformen (5), nachdem eine vorbestimmte Zeit seit dem Reifenrohling-Pressschritt (S1c) verstrichen ist,
**dadurch gekennzeichnet, dass**
das Reifenvulkanisierverfahren nach dem Positionierungsschritt (S1d) einen Laufflächenform-Bewegungsschritt (S1 e) eines Bewegens der Laufflächenform (4) in einer Reifenradialrichtung umfasst, um die Laufflächenform (4) an ihrer Referenzposition (P) zu positionieren, und
eine Teilungsposition (Q) zwischen dem Paar Seitenformen (5) und der Laufflächenform (4) innerhalb von 15 % einer Reifenquerschnittshöhe (H) nach innen und nach außen in der Reifenradialrichtung von einer Maximalbreitenposition (M) eines vulkanisierten Reifens (50) liegt.

2. Reifenvulkanisierverfahren nach Anspruch 1, wobei
die Laufflächenform (4) eine Vielzahl von Segmenten (4A) umfasst, die in einer Reifenumfangsrichtung ausgerichtet sind, und
in dem Laufflächenform-Bewegungsschritt (S1e) die Vielzahl von Segmenten (4A) in der Reifenradialrichtung nach innen bewegt werden.

3. Reifenvulkanisierverfahren nach Anspruch 1 oder 2, wobei die Teilungsposition (Q) zwischen dem Paar Seitenformen (5) und der Laufflächenform (4) innerhalb von 5 % der Reifenquerschnittshöhe (H) nach innen und nach au-ßen in der Reifenradialrichtung von der Maximalbreitenposition (M) des vulkanisierten Reifens (50) liegt.

4. Reifenvulkanisierverfahren nach einem der Ansprüche 1 bis 3, wobei die Teilungsposition (Q) zwischen dem Paar Seitenformen (5) und der Laufflächenform (4) die Maximalbreitenposition (M) des vulkanisierten Reifens (50) ist.

## Revendications

1. Procédé de vulcanisation de pneumatique pour vulcaniser un pneumatique cru (50a) en utilisant un moule de vulcanisation (2) incluant un moule de bande de roulement (4) destiné à mouler une portion formant bande de roulement du pneumatique cru (50a) et une paire de moules latéraux (5) destinés à mouler une paire de portions formant parois latérales (52) du pneumatique (50a), le procédé de vulcanisation de pneumatique comprenant :
une étape de montage (S1) consistant à monter le pneumatique cru (50a) à l'intérieur du moule de vulcanisation (2) dans un état dans lequel le moule de vulcanisation (2) est ouvert ; et
une étape de vulcanisation (S2) consistant à vulcaniser le pneumatique cru (50a) dans un état fermé dans lequel le moule de bande de roulement (4) et la paire de moules latéraux (5) sont placés à des positions de référence prédéterminées (P), dans lequel
l'étape de montage (S1) inclut
une étape de pressage de pneumatique cru (S1c) consistant à, une fois le pneumatique cru (50a) monté à l'intérieur du moule de vulcanisation (2), déplacer l'un au moins de la paire de moules latéraux (5) de telle sorte que la paire de moules latéraux (5) sont plus proches l'un de l'autre dans une direction axiale du pneumatique que dans les positions de référence (P) de ceux-ci, afin de réduire largeur dans la direction axiale du pneumatique entre la paire de portions formant parois latérales (52) du pneumatique vert (50a), et
une étape de positionnement (S1d) consistant à, après écoulement d'un temps de référence prédéterminé à compter de l'étape de pressage de pneumatique cru (S1c), déplacer la paire de moules latéraux (5) jusqu'aux positions de référence (P) et arrêter la paire de moules latéraux (5),
**caractérisé en ce que**
le procédé de vulcanisation de pneumatique comprend une étape de déplacement de moule de bande de roulement (S1e) consistant à, après l'étape de positionnement (S1d), déplacer le moule de bande de roulement (4) dans une direction radiale du pneumatique pour positionner le moule de bande de roulement (4) à la position de référence (P) celui-ci, et une position de division (Q) entre la paire de moules latéraux (5) et le moule de bande de roulement (4) est à l'intérieur de 15 % d'une hauteur de section transversale du pneumatique (H) vers l'intérieur et vers l'extérieur dans la direction radiale du pneumatique à partir d'une position de largeur maximum (M) d'un pneumatique vulcanisé (50).

2. Procédé de vulcanisation de pneumatique selon la revendication 1, dans lequel
le moule de bande de roulement (4) inclut une pluralité de segments (4A) alignés dans une direction circonférentielle du pneumatique, et
dans l'étape consistant à déplacer le moule de bande de roulement (S1e), la pluralité de segments (4A) sont déplacés vers l'intérieur dans la direction radiale du pneumatique.

3. Procédé de vulcanisation de pneumatique selon la revendication 1 ou 2, dans lequel la position de division (Q) entre la paire de moules latéraux (5) et le moule de bande de roulement (4) est à l'intérieur de 5 % de la hauteur de section transversale du pneumatique (H) vers l'intérieur et vers l'extérieur de la direction radiale du pneumatique à partir de la position de largeur maximum (M) du pneumatique vulcanisé (50).

4. Procédé de vulcanisation de pneumatique selon l'une quelconque des revendications 1 à 3, dans lequel la position de division (Q) entre la paire de moules latéraux (5) et le moule de bande de roulement (4) est la position de largeur maximum (M) du pneumatique vulcanisé (50).
